# EUROPÄISCHE PATENTSCHRIFT

(11) **EP 1 337 771 B1**
(45) Veröffentlichungstag und Bekanntmachung des Hinweises auf die Patenterteilung: **28.02.2007**
(21) Anmeldenummer: 01996703.3
(22) Anmeldetag: 03.11.2001
(51) Int. Cl.: F16H 55/24, F16H 1/16

(54) **GETRIEBEELEMENT ZUR SPIELFREIEN DREHMOMENTÜBERTRAGUNG**
GEAR TRAIN ELEMENT FOR PLAY-FREE TORQUE TRANSMISSION
ELEMENT D'ENGRENAGE DESTINE A LA TRANSMISSION D'UN COUPLE SANS JEU

(30) Priorität: 16.11.2000 DE 10057117; 21.05.2001 DE 10124601
(43) Veröffentlichungstag der Anmeldung: 27.08.2003
(73) Patentinhaber: ROBERT BOSCH GMBH, 70442 Stuttgart (DE)
(72) Erfinder: BUX, Harald, 73460 Huettlingen (DE); PAWELETZ, Anton, 70736 Fellbach (DE)
(86) Internationale Anmeldenummer: PCT/DE2001/004145
(87) Internationale Veröffentlichungsnummer: WO 2002/040897

(56) Entgegenhaltungen:
- DE-A- 19 713 423
- FR-A- 712 311
- US-A- 3 635 100
- PATENT ABSTRACTS OF JAPAN vol. 016, no. 217 (M-1252), 21. Mai 1992 (1992-05-21) -& JP 04 039456 A (ISHIZAKI HONTEN:KK), 10. Februar 1992 (1992-02-10)

## Beschreibung

### Technisches Gebiet

In Getrieben zur Übertragung von Drehmomenten werden Antriebselemente mit eigenständigen Rotationsachsen eingesetzt. Zwischen diesen Antriebselementen können Kupplungselemente eingesetzt werden oder auch Torsionselemente vorgesehen werden. Die Positionen der jeweiligen Achsen der Getriebsanordnung, wie Wellenverbindung und Motorantrieb verändern ihre Rotationsachsen aufgrund von Fertigungstoleranzen, Verschleiß und Temperatureinflüssen in unterschiedlichem Maße, auch abhängig vom jeweils verwendeten Werkstoff.

### Stand der Technik

Aus der US 3 635 100 ist eine Getriebeanordnung mit einem Getriebeelement mit den Merkmalen des Oberbegriffes des Anspruches 1 bekannt.

Die an Getriebeanordnungen gestellten Anforderungen umfassen neben einer hohen Zuverlässiglceit, geringem Geräusch und langer Standzeit auch die Anforderung der Spielfreiheit. Das Kriterium der Spielfreiheit steht für eine hohe Positionsstreue; in Schneclcenantrieben mit zueinander um 90° versetzt angeordneten Antriebswellen steht die Selbsthemmung im Vordergrund, d.h. eine einmal gewählte Verzahnungsposition der Antriebselemente läßt sich nicht unter dem Einfluß des Gegenmomentes vom Stirnrad ändern.

Die Spielfreiheit von Getriebeanordnungen setzt die auftretenden mechanischen Beanspruchungen der Zahnflanken insbesondere geradverzahnter Stirnräder auf Biegung erheblich herab. Dies gilt in eingeschränktem Maße auch für schrägverzahnte Zahnräder. Die Spielfreiheit von Getriebeanordnungen wird in der Regel durch den Einsatz von Torsionsfedern erreicht, im Automobilbau beispielsweise durch Torsionsstäbe. In der Regel benötigen Torsionsstäbe aufgrund ihrer Einbaulänge jedoch einen erheblichen Einbauraum vor allem Baulänge.

Die Forderung nach Spielfreiheit einer Getriebeanordnung geht zudem einher mit der Forderungen einer großen radialen Nachgiebigkeit, bei gleichzeitiger großer Torsions- und axialer Steifigkeit zwischen miteinander kämmenden Zahnrädern. Werden in Getriebeanordnungen Kupplungen und Torsionsstäbe eingesetzt, so addieren sich Spiel- und die Biegeeigenschaften in ungünstiger Weise, so daß Spielfreiheit nur unter Einsatz hoher Vorspannungen gewährleistet werden kann. Dies wiederum bedingt den Einsatz von Bauelementen, die höchste Vorspannmomente erzeugen. Diese ihrerseits beanspruchen Bauraum, so daß den Anforderungen an kompakt bauende und spielfreie Getriebeanordnungen unzureichend Rechnung getragen werden kann.

### Darstellung der Erfindung

Mit der erfindungsgemäß vorgeschlagenen Lösung kann die Elastizität des Abtriebs vollständig in ein Getriebeelement integriert werden. Damit läßt sich der zum Vorsehen von Kupplungselementen und Torsionsstäben benötigte Bauraum drastisch reduzieren. Die erfindungsgemäße Lösung umfaßt einen Federsatz, der eine oder mehrere konzentrisch zueinander angeordnete Flachfedern umfassen kann. Die einzelnen Flachfedern umfassen ihrerseits eine Anzahl von senkrecht oder waagerecht verlaufenden Lamellen, Mitnahme- bzw. Stützelementen.

Der in einer Bohrung des mittels eines elastischen Abtriebselementes aufgenommene Federsatz kann in dieses mittels in Ringspalten zwischen Federsatz und Abtriebselement bzw. zwischen Abtriebswelle und Federsatz aufgenommenen Hülsen mit Tragabschnitten bzw. mittels in diesen Ringspalten verschiebbar gelagerten Schiebesitzen gelagert werden. Mittels der verschiebbar an der Abtriebswelle eines elektrischen Antriebs aufgenommenen Schiebesitze läßt sich der Kraftfluß hinsichtlich der Durchbiegung der Abtriebswelle des elastischen Antriebs vorgeben und die radiale Steifigkeit einstellen.

Mittels der Mitnahmeelemente, die z.B. als ringförmige Hülsen beschaffen sein können, kann der Kraftfluß des Antriebsmomentes durch die Abtriebswelle an das Abtriebselement beeinflußt und variiert werden. Die Mitnahmeelemente erlauben einen Kraft- oder Fonnschluß für die Drehmomentübertragung, ferner läßt sich durch sie die radiale Steifigkeit der Bauteillcombination Abtriebswelle/Abtriebselement einstellen und in Grenzen variieren.

Je nach Anforderungen an die Spielfreiheit und das zu übertragende Drehmoment kann mit der erfindungsgemäßen Lösung durch Verstellung der Schiebesitze zwischen Federsatz und Abtriebswelle des elektrischen Antriebes für den jeweiligen Anwendungsfall die gewünschte radiale Steifigkeit eingestellt werden. Hinsichtlich der Axiallänge der Abtriebswelle entsteht kein zusätzlicher Bauraumbedarf; der Blecelcrafhierlauf läßt sich entsprechend der in axiale Richtung vorgebbaren Einstellabstände der Schiebesitze in gewünschter Stufung einstellen.

Durch Anschläge am Getriebeelement, sei es eine Schnecke, eine gerade- oder ein schrägverzalmtes Stirnrad, ist die Einstellung der maximalen Auslenkung mit einfachen Mitteln möglich.

Der Federsatz kann aus annäherend senkrecht oder waagerecht zu der Antriebsachse orientierten Lamellen aufgebaut sein; diese können bei senkrechter Orientierung z.B. als Flachfedern ausgeführt sein oder als gewickelte Profilelemente beschaffen sein. Ferner kann der Federsatz als eine Kombination wechselsinnig geschichteter konzentrisch angeordneter Flachfedern beschaffen sein. Schließlich ist der Einsatz mehrfach gewickelter Flachfedern möglich, mit denen zudem an den Kontaktflächen benachbarter Lamellen eine Möglichkeit gegeben ist, sich aufbauende Schwingungen rechtzeitig durch Reibung der benachbarten Lammellen zu dämpfen.

Aus den erfindungsgemäß vorgeschlagenen Komponenten Federsatz, Mitnahmeelementen und Schiebesitzen lassen sich die für den jeweiligen Einsatzfall optimalen Parameter des Getriebeelementes hinsichtlich Spielfreiheit, zu übertragendem Drehmoment und radiale Steifigkeit in optimaler Weise einstellen.

### Zeichnung

Anhand der Zeichnung wird die Erfindung nachstehend näher erläutert.

Es zeigt:
- Figur 1: eine Antriebsanordnung mit geschnitten dargestelltem Getriebeelement eines Elelctroalitriebes,
- Figur 2: ein Antriebselement mit einem Federsatz, der an Außen- und Innenseite mit Schiebesitzen versehen ist, zur Einstellung der radialen Steifigkeit,
- Figur 3. 1: die Prinzipskizze eines Federsatzes mit parallel orientierten Lamellen,
- Figur 3.1.1 und 3.1.2: formschlüssige Verbindungen zwischen einem Schiebesitz und senkrecht dazu sich erstreckenden Lammellen,
- Figur 3.2: in Umfangssegmente eingebettete Lamellenstränge in Parallelanordnung, sich senkrecht zur Zeichenebene erstreckend,
- Figur 3.3: einen Federsatz mit Lamellen in senkrechter Anordnung,
- Figur 3.4: einen Federsatz mit gewickelten Profilelementen,
- Figur 3.5: konzentrisch angeordnete, ringförmig ausgestaltete Flachfedersätze und
- Figur 4: eine einen lamellenförmig ausgebildeten Federsatz zugeordnete zusätzliche Axialfeder samt Kennlinie bei Radialauslenkung.

### Ausführungsvarianten

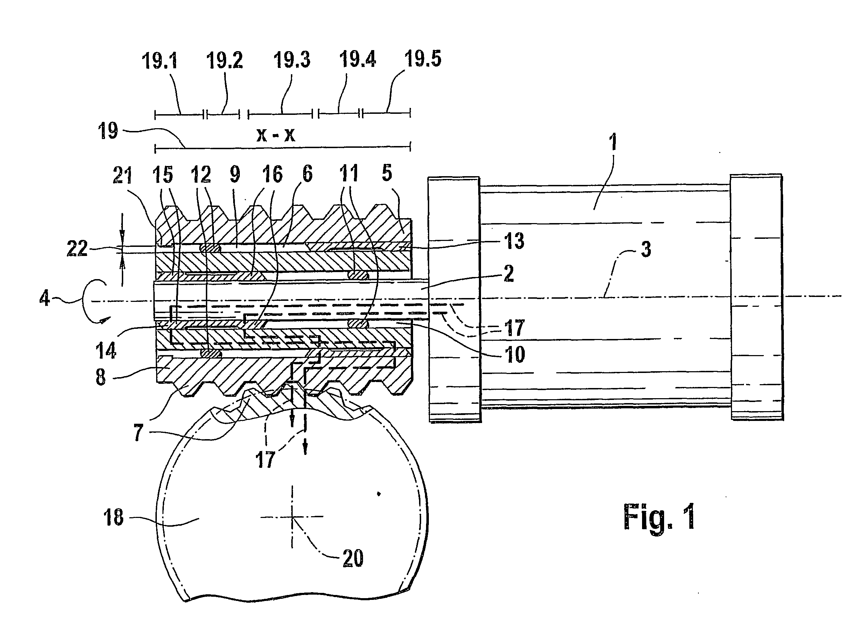

Figur 1 zeigt eine Anthebsanordnung mit geschnitten dargestelltem Antriebselement eines Elektroantriebes.

Das erfindungsgemäß konfigurierte Getriebeelement 5 ist gemäß der Darstellung in Figur 1 an einer Abtriebswelle 2 eines Antriebsmotors 1 wie z.B. eines elektrischen Antriebes, aufgenommen. Die Abtriebswelle 2 des elektrischen Antriebes 1 rotiert im Drehsinn 4 um die Symmetrieachse 3. Das Getriebeelement 5 ist von einer sich in axiale Richtung erstreckenden Bohrung 6 durchzogen, in welcher ein Federsatz 8, hülsenförmig ausgebildete Mitnahmeelemenete 13 bzw. 14 sowie Stützelemente 11 und 12 aufgenommen sind.

An der Außenseite der die Bohrung 6 des Getriebeelementes 5 durchsetzenden Abtriebswelle 2 ist auf der dem elektrischen Anrieb 1 zugewandten Seite in axiale Richtung entlang eines mit Bezugszeichen 19 gekennzeichneten Einstellweges ein Stützelement 11 in Form eines Schiebesitzes beweglich aufgenommen. Ferner ist die Abtriebswelle 2 des elektrischen Antriebes 1 von einem hülsenförmigen Mitnahmeelement 14 umschlossen. An der Außenseite des hülsenförmigen Mitnahmeelementes 14 befinden sich zwei mit Bezugszeichen 15 und 16 identifizierte ringförmige Tragabschnitte, die der Innenseite des Federsatzes 8 zugewandt sind. Der Federsatz 8 seinerseits besteht aus einer Vielzahl von Lamellen 40 wie weiter unten noch eingehender beschrieben wird.

An der Außenseite des Federsatzes 8 befindet sich am freien Ende von Antriebswelle 2 und Federsatz 8 ein ebenfalls verschiebbares Stützelement 12 in Gestalt eines Schiebesitzes. Dessen maximale Auslenkmöglichkeit entsprechend des Einstellweges 19 zur Einstellung
der radialen Steifigkeit der Kombination aus Getriebeelemente 5 und Abtriebswelle 2 des elektrischen Antriebes 1, ist durch einen Anschlag 21 gegeben, der vom freien Ende des Federsatzes 8 in einem mit Bezugszeichen 22 versehenen Spaltmaß beabstandet ist. Der Federsatz 8 ist ferner von einem ringförmig konfigurierten Mitnahmeelement 13 umschlossen, dessen ringförmig ausgebildete Tragsegmente der Außenumfangsfläche des Federsatzes 18 zugewandt sind. Das Mitnahmeelement 13 stützt sich mit seiner durchgängigen flachen Seite an der Innenseite der Bohrung 6 des Getriebeelementes 5 ab, welches seinerseits an seinem Außenumfang mit einer Verzahnung 7 versehen ist. Die Verzahnung 7 kann eine schneckenförmige Verzahnung sein; sie kann ferner als eine Stirnrad- oder eine Schrägverzahnung ausgebildet sein. Über die an dem Außenumfang des Getriebeelementes 5 ausgebildete Verzahnung 7 kann das vom elektrischen Antrieb 1 über dessen Abtriebswelle 2 im Drehsinn 4 ausgeübte Drehmoment an eine Verzahnung eines weiteren, mit dem Getriebeelement 5 kämmenden Abtriebselementes 18 übertragen werden, welches im Ausführungsbeispiel gemäß Figur 1 als ein außenverzahntes Schneckenrad ausgebildet ist. Das Schneckenrad 18 rotiert um eine Rotationsachse 20, welche in bezug auf die Abtriebswelle 2 des elektrischen Antriebes 1 um 90° versetzt angeordnet ist. Bei entsprechender Geometrie der Verzahnung oder Steigung der Schnecke ist mit dem erfindungsgemäß beschaffenen Getriebeelement 5 und dem Schneckenrad 18 ein hoher Grad an Selbsthemung erzielbar.

Der Einstellweg 19 ist in bezug auf die Symmetrielinie 3 der Abtriebswelle 2 des elektrischen Antriebes 1 in eine Vielzahl von Einstellabständen 19.1, 19.2, 19.3, 19.4 sowie 19.5 unterteilt, in welche die Stützelemente 11 bzw. 12 sowie die Mitnahmeelemente 13 bzw. 14 in einem ringförmig den Federnsatz 8 umgebenden Hohlraum 9, d.h. dem Außenringspalt 9 in axiale Richtung bzw. in einem Innenringspalt 10 verschiebbar sind. Werden die als Schiebesitze konfigurierten Stützelemente 11 bzw. 12 in ihre Positionen entsprechend der Einstellabstände 19.1 bzw. 19.4 verschoben, so stellt sich eine Biegecharakteristik ein, welche für einen bestimmten Anwendungsfall die Optimale sein kann. Durch die axiale Erstreckung der Ringspalte 9 bzw. 10 ist die axiale Verschiebbarkeit der als Stützelemente fungierenden Schiebesitze 11 bzw. 12 in ihren jeweiligen Ringspalten 9 bzw. 10 lediglich durch den Außenanschlag 21 begrenzt, der die maximale Verschiebbarkeit des im Außenringspalt 9 verschiebbar aufgenommenen Schiebesitz 12 in axiale Richtung begrenzt.

Der sich durch die Anordnung der hülsenförmig konfigurierten Mitnahmeelemente 13 bzw. 14 einstellende Drelmiomentenfluß ist durch die gestrichelten Linien bezeichnet, welche mit Bezugszeichen 17 gekennzeichnet sind und den Kraftfluß von der Abtriebswelle 2 des elektrischen Antriebes 1 über das innen liegende hülsenförmig konfigurierte Mitnaluneelement 14 in den Federnsatz 8 und von diesem in das im Außenspalt 9 aufgenommene äußere Mitnahmeelement 13 darstellen. Vom äußeren Mitnahmeelement 13, anliegend an der Innenwandung des das Getriebeelement 5 durchsetzenden Bohrung 6, wird das Drehmoment über die Außenverzahnung 7 des Getriebeelementes 5 an die Außenverzahnung des hier in der Darstellung gemäß Figur 1 als Schneckenrad konfigurierten weiteren Getriebeelementes 18 übertragen, so daß das Drehmoment schließlich das Lastmoment am Schneckenrad 18 überwinden kann.

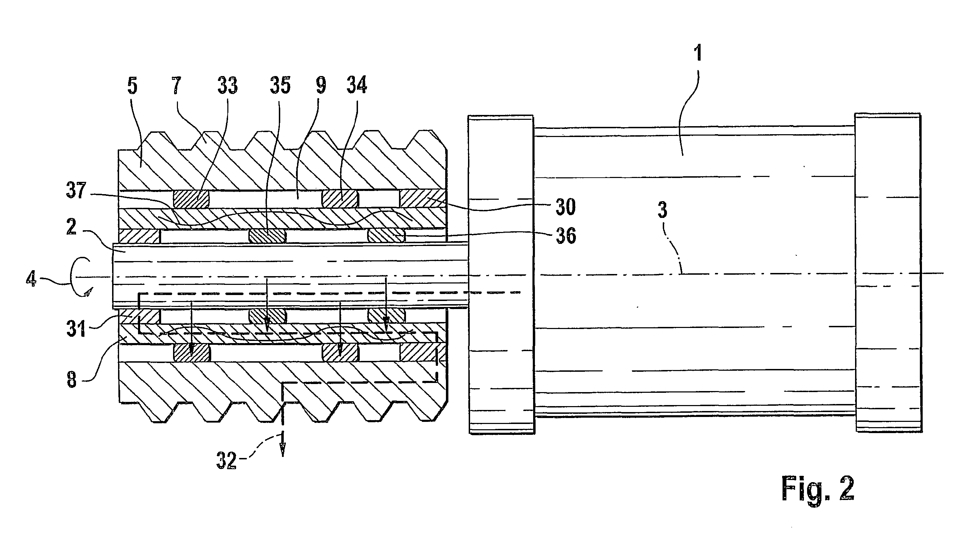

Der Darstellung gemäß Figur 2 ist ein Federsatz entnehmbar, der an Außen- und Innenseite mit Schiebesitzen versehen ist zur Einstellung der Biegelinie der Kombination Getriebeelement/Abtriebswelle eines elektrischen Antriebes.

Analog zur Darstellung in Figur 1 ist Figur 2 ein elektrischer Antrieb 1 entnehmbar, dessen Abtriebswelle 2 im Drehsinn 4 um die Symmetrielinie 3 rotiert. Im Unterschied zur Darstellung gemäß Figur 1 ist der Federsatz 8 gemäß der Darstellung in Figur 2 an der Außenumfangsfläche der Abtriebswelle 2 durch die Stützelemente 35 bzw. 36 abgestützt, die in analoger Weise zur Darstellung gemäß Figur 1 ebenfalls als in ihrem jeweiligen Spalt 10 verschiebbare Schiebesitze ausgebildet sind. An der Außenseite des Federsatzes 8 gemäß der Darstellung in Figur 2 sind ebenfalls zwei Stützelemente 33 bzw. 34 aufgenommen, die im Außenringraum 9 zwischen Federsatz 8 und Getriebeelement 5 in axiale Richtung verschiebbar sind. Die Mitnahmeelemente gemäß der Darstellung in Figur 2 sind mit Bezugszeichen 30 bzw. 31 gekennzeichnet und sowohl im Außenringspalt 9 als auch im Innenringspalt 10 aufgenommen. Über die Mitnahmeelemente 30 bzw. 31 wird das vom elektrischen Antrieb 1 über die Abtriebswelle 2 aufgebrachte Drehmoment über den zwischengeschalteten Federsatz 2 an die Außenverzahnung 7 des Getriebeelementes 5 übertragen.

In der Darstellung gemäß Figur 2 ist eine mit Bezugszeichen 37 identifizierte Biegelinie eingezeichnet, die durch die gewählte Anordnung der Stützelemente 33 bzw. 34 im Außenspaltring 9 und durch die Position der als Stützelemente fungierenden Schiebesitze 35 bzw. 36 im Innenringspalt 10 definiert ist. Gemäß des Kraftflusses der Biegekräfte, der durch das Bezugszeichen 32 in Figur 2 definiert ist, stellt sich ein über die rotierend angetriebene Abtriebswelle 2 über das innere Mitnahmeelement 31 in den Federsatz 8 einstellender Verlauf des Drehmomentes ein. Das Drehmoment wird über das äußere Mitnahmeelement 30, aufgenommen im Außenringspalt 9 zwischen Federsatz 8 und der Bohrung 6 des Getriebeelementes 5 in dieses eingeleitet und über die Verzahnung 7 im in zur Figur 1 analoger Weise an ein weiteres Getriebeelement - hier nicht dargestellt - übertragen.

Der mit Bezugszeichen 37 identifizierte Verlauf zeigt die resultierende Biegelinie, die aus der Übertragung der Biegekräfte über die im Innenringspalt 10 angeordneten Schiebestützelemente 35 bzw. 36 sowie die im Außenringspalt 9 aufgenommenen Stützelemente 33 bzw. 34 auf das Getriebeelement 5 resultiert.

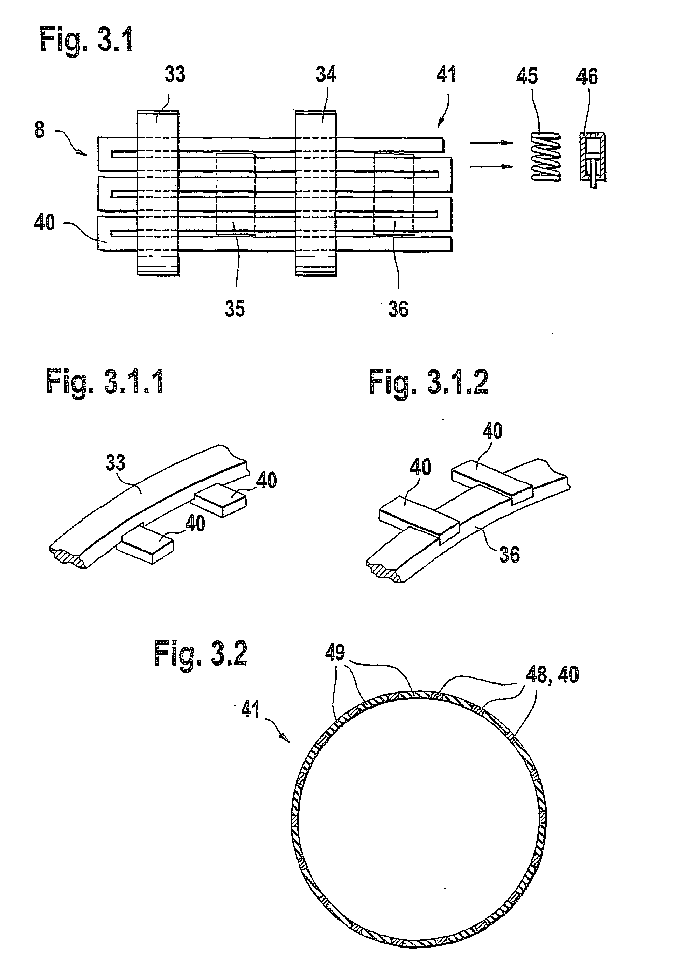

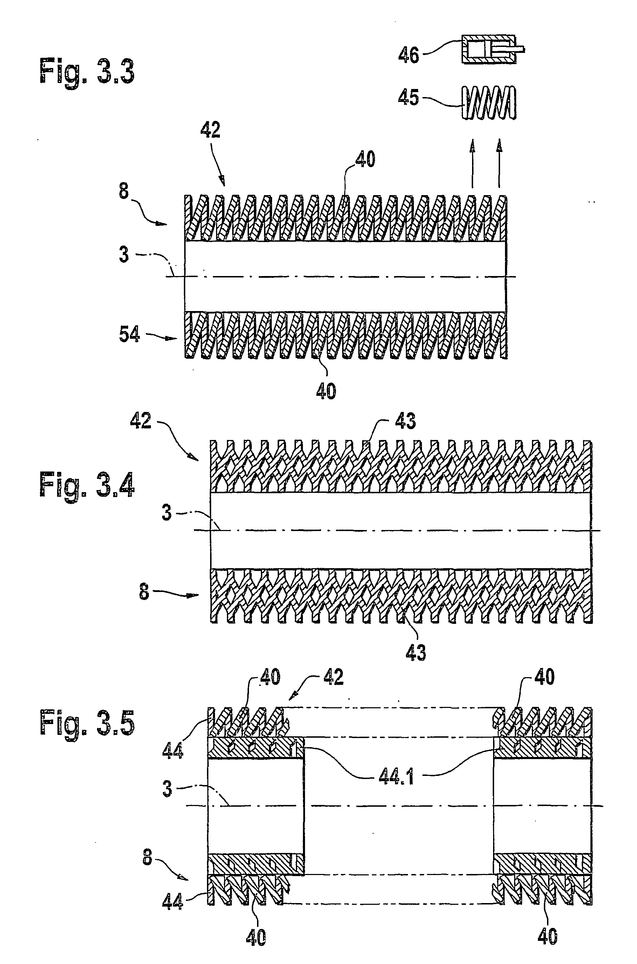

Der Darstellung gemäß Figur 3.1 ist die Prinzipskizze eines Federsatzes mit parallel orientierten Lamellen entnehmbar.

Bei der Darstellung gemäß Figur 3.1 handelt es sich um eine stark schematisierte prinzipskizzenhafte Darstellung eines Federsatzes 8. Der Federsatz 8 umfaßt eine in Parallelanordnung 41 angeordnete durchgängige Lamellenanordnung 40. An der Außenseite der Lamellenanordnung befinden sich die in Figur 2 dargestellten Stützelemente in Form von Schiebesitzen 33 bzw. 34. Von den in Parallelanordnung 41 orientierten Lamellen 40 werden die zwischen Federsatz 8 und nicht dargestellter Abtriebswelle 2 des elektrischen Antriebes 1 aufgenommenen Stützelemente, ebenfalls als Schiebesitze 35, 36 beschaffen, überdeckt. Die Lamelle 40 gemäß der Darstellung in Figur 3.1 ist ein einstückiges Bauteil, welches durch die Wahl der verschieblich angeordneten Stützelemente 33, 34, 35 bzw. 36 eine Charakteristik eines Feder-/Dämpferelementes 45, 46 erhält, je nach axialer Orientierung der Stützelemente 33 bis 36. Eine Verbesserung der Mitnahme könnte auch hier nicht näher dargestellte Aussparungen oder Strukturen an den Schiebesitzen 33 bzw. 34 erzielt werden, welche an die Lamellen 40, 41 formschlüssig angepaßt werden könnten. Gemäß der Figuren 3.1.1 bzw. 3.1.2 kann ein Formschluß zwischen den Stützelementen 33, 34, 35 bzw. 36 und einer endlosen Lammelle 40 dadurch verbessert werden, daß sowohl an der Unterseite der Stützelemente 33 bzw. 34, 35 oder 36 Aussparungen vorgesehen sind, die die die Abschnitte der Lammellen 40 aufnehmen (Figur 3.1.1). Andererseits ist es ebenso möglich, an der Oberseite eines Stützelementes 36 Aussparungen vorzusehen, durch welche sich die Abschnitte der Lammelle 40 erstrecken. Dies erlaubt eine Verbesserung des Ansprechverhaltens im Dämpfungsfalle.

Aus der Darstellung gemäß Figur 3.2 gehen in die Umfangssegmente eines Federsatzes eingebettete Lamellenstränge Parallelanordnung hervor, die sich senkrecht zur Zeichenebene erstrecken.

Der hier als Zylinderkonfiguration ausgebildete Federsatz 8 umfaßt einzelne Elastomersegmente 49, in welchen sich in axialer Richtung erstreckend die Einzellamellenstränge der durchgängigen Lamelle 40 gemäß der Prinzipskizze in Figur 3.1 erstrecken. Der Verlauf der Lamellen, d.h. Parallellage zur Symmetrielinie 3 der Abtriebswelle 2 des elektrischen Antriebes 1 verläuft senkrecht in bzw. senkrecht aus der Zeichenebene hinein bzw. hinaus. Die Lamellen 40 sind spielfrei in die Elastomersegmente 49 des Federsatzes 8 eingelassen.

In der Darstellung gemäß Figur 3.3 ist ein Federsatz mit Lamellen in senkrechter Anordnung entnehmbar.
Gemäß dieser Darstellung umfaßt der Federsatz 8 in senkrechter Lage 42 orientierte einzelne Lamellen 40, die beispielsweise in Form eines geschlitzten Balkens ausgeführt sein können. Die Lamellen 40 des Federsatzes 8 sind in der Darstellung gemäß Figur 3.3 leicht geneigt angeordnet und als sich über die gesamte axiale Länge der Abtriebswelle 2 des elektrischen Antriebes 1 erstreckende Flachfedern ausgeführt. Die gewählte Lamellenanord-nung 40 in der Darstellung gemäß Figur 3.3 in senkrecht orientierter Lage 42 verleiht dem Federsatz 8 in radiale Richtung gesehen eine bestimmte Federdämpfercharalcteristik, angedeutet durch die Federdämpferanordnung 45, 46, auf die in radiale Richtung bewirkende Kräfte einwirken.

Gemäß der Darstellung in Figur 3.4 läßt sich der Federsatz 8 auch als eine sich in axiale Richtung parallel zur Symmetrieachse 3 der Abtriebswelle 2 des elektrischen Antriebes 1 ausgebildete Anordnung von gewickelten Profilelementen 43 ausbilden. Die Profilelemente 43 können gewickelte Profilelemente sein, die sich einander überdeckend in axiale Richtung entlang des Einstellweges 19 der Abtriebswelle 2 des elektrischen Antriebes 1 erstrekken. Durch die sich zwischen den einzelnen gewickelten Profilelementen 43 erstreckenden Hohlräume wohnt dieser Ausgestaltungsvariante eines Federsatzes 8 eine hohe Elastizität inne. Je nach Anwendungsfall, in welchem das erfindungsgemäß ausgestaltete Getriebeelement 5 zum Einsatz kommt, kann dies durchaus gewünscht sein.

Im Gegensatz zu den Darstellungen gemäß der Figuren 3.3 bzw. 3.4 ist in der Darstellung gemäß Figur 3.5 eine konzentrisch angeordnete mehrere einzelne Flachfedern umfassender Federsatz wiedergegeben.

Koaxial zur Symmetrieachse 3 der Abtriebswelle 2 des elektrischen Antriebes 1 sind eine außen liegende Flachfeder 44 dargestellt, deren Lamellen 40 im wesentlichen in senkrechter Lage zur bezogen auf die Symmetrieachse 3 der angetriebenen Abtriebswelle 2 - hier nicht dargestellt - des elektrischen Antriebes 1 angeordnet sind. Die außen liegende Flachfeder 44 erstreckt sich kontinuierlich über die gesamte Länge der Abtriebswelle 2 des elektrischen Antriebes 1 und ist aus Gründen der besseren Darstellbarkeit in der Mitte unterbrochen dargestellt. Unterhalb der außen liegenden Flachfeder 44, deren Lamellen 40 im wesentlichen in senkrechter Lage 42 orientiert sind, befindet sich ein innenliegendes Federelement 44.1. Gemäß der Darstellung in Figur 3.5 kann dieses Federelement 44.1 lediglich im Anfangsbereich bzw. im Endbereich der durchgängig ausgebildeten äußeren Flachfeder 44 angeordnet werden. Das liegende oder die innenliegende Federelemente 44.1 sind konzentrisch zum außen liegenden Flachfederelement 44 angeordnet. Durch geeignete Auswahl in bezug auf die Schlitzung der Lamellen 44 bzw. auf die axiale Länge der innen liegenden Flachfederelemente 44.1 läßt sich mit dieser kombinierten Anordnung eine Steifigkeitscharakteristik einstellen, die speziellen Anwendungsfällen besser gerecht wird als die Federsatzkonfigurationen gemäß der Darstellung in Figur 3.3 bzw. 3.4.

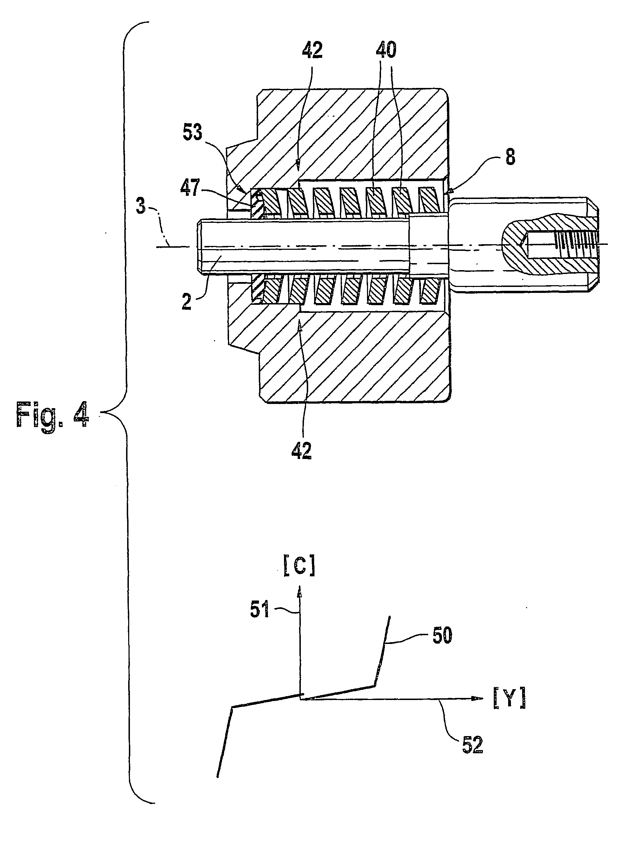

Aus der Darstellung gemäß Figur 4 geht die Anordnung einer zusätzlichen Axialfeder an einem Federsatz 8 sowie deren Kennlinie bei Radialauslenkung näher hervor.

Der Anordnung gemäß Figur 4 ist eine Abtriebswelle 2 eines hier nicht näher dargestellten elektrischen Antriebes entnehmbar, welche symmetrisch zur Symmetrielinie 3 ist. Die Abtriebswelle 2 des hier nicht näher dargestellten elektrischen Antriebes 1 wird von einem Federsatz 8 umschlossen, dessen Einzellamellen 40 im wesentlichen in senkrechter Orientierung 42 aufgenommen sind. Im Unterschied zu den bisher beschriebenen Federsätzen 8 gemäß den Darstellungen der Figuren 3.1, 3.2, 3.3, 3.4 und 3.5 ist dem Federsatz 8 gemäß der Ausführungsvariante in Figur 4 ein zusätzliches in axiale Richtung wirkendes Federelement 47 zugeordnet. Das zusätzliche Axialfederelement 47 stützt sich mit einer Federschulter 53 im es umgebenden Getriebeelement 5 ab. Durch diese Ausführungsvariante ist eine Möglichkeit gegeben, durch Kontakt und Reibung der einzelnen benachbarten Lamellen 40 dem Aufbau potentieller Schwingungen entgegenzuwirken und für eine entsprechende Dämpfung zu sorgen. Eine sich einstellende Asymmetrie von Federsteifigkeit und Dämpfung aufgrund der Richtungsabhängigkeit von Federsteifigkeit und Dämpfung im Federsatz (Beipressung in axiale Richtung ist diese wesentlich größer als bei Zug in axiale Richtung) kann durch die Aufnahme des zusätzlichen Federelementes 47 entgegengewirkt werden. Die zusätzlich eine axiale Federkraft ausübende Feder 47 ist mit einem sehr kleinen Spalt zwischen der Abtriebswelle 2 und der Verzahnung des Getriebeelementes 5 aufgenommen.

Mit der vorgeschlagenen Lösung wird die Elastizität nahezu vollständig in einem ein Getriebeelement 5 integriert, wobei das Konzept eine Kombination aus Lamellen 40, Mitnaluneelementen 13, 14 bzw. 30 und 31 sowie Stützelementen 11 bzw. 12 sowie 33, 34, 35 und 36 beinhaltet. Aus den aufgeführten Elementen läßt sich ein Netzwerk der Elemente Feder und Dämpfer konfigurieren, wobei die Steifigkeit in radialer Richtung entsprechend des in Figur 4 wiedergegebenen Diagramms abhängig von der Radiallenkung 42 eine erhebliche Steigerung der Anpresskraft 51 nach sich zieht, wie sich aus dem Steifigkeitsverlauf 50 gemäß der Darstellung in Figur 4 ablesen läßt. Die gewünschte radiale Steifigkeit läßt sich mithin durch entsprechende Verschiebung der Stützelemente 11, 12, 33, 34, 35 und 36 in bestimmte Einstellabstände 19.1 bis 19.5 entlang des axialen Einstellweges 19 vorgeben, ohne daß sich dabei die Abmessungen des Getriebeelementes 5 wesentlich verändern.

### Bezugszeichenliste

- 1: Elektrischer Antrieb
- 2: Abtriebswelle
- 3: Symmetrielinie
- 4: Drehsinn
- 5: Getriebeelement
- 6: Bohrung
- 7: Außenverzahnung
- 8: Federsatz
- 9: Außenringspalt
- 10: Innenringspalt
- 11: Innerer Schiebesitz
- 12: Äußerer Schiebesitz
- 13: Äußeres Mitnahmeelement
- 14: Inneres Mitnahmeelement
- 15: Erstes Ringsegment
- 16: Zweites Ringsegment
- 17: Kraftfluß
- 18: Weiteres Abtriebselement (Schneckenrad)
- 19: Einstellweg
- 19.1: Einstellabstände
- 19.2: Einstellabstände
- 19.3: Einstellabstände
- 19.4: Einstellabstände
- 19.5: Einstellabstände
- 20: Rotationsachse
- 21: Anschlag
- 22: Spaltmaß
- 30: Äußeres Mitnahmeelement
- 31: Inneres Mitnahmeelement
- 32: Kraftflußdrehmoment
- 33: Stützelement
- 34: Stützelement
- 35: Stützelement
- 36: Stützelement
- 37: Biegelinie
- 40: Lamellen
- 41: Parallele Lamellenanordnung
- 42: Senkrechte Lamellenanordnung
- 43: Gewickelte Profilelemente
- 44: Konzentrische Flachfeder
- 44.1: Konzentrische innenliegende Flachfeder
- 45: Feder
- 46: Dämpfung
- 47: Zusätzliches Axialfederelement
- 48: Elastomereinbettung
- 49: Segment
- 50: Steifigkeitsverlauf
- 51: Anpreßkraft:
- 52: Radialauslenkung
- 53: Federschulter
- 54: Flachfeder

## Patentansprüche

1. Getriebeanordnung (5,18) mit einem Getriebeelement (5), welches antriebsseitig über einen Antriebsmotor (1) angetrieben wird, auf dessen Abtriebswelle (2) das Getriebeelement (5) aufgenommen ist, welches an seiner Umfangsfläche mit einer Außenverzahnung (7) versehen ist und mit einer oder mehreren Verzahnungen weitere Getriebeelemente (18) kämmt, **daduch gekennzeichnet**, **daß** zwischen der Antriebswelle (2) und einem Federsatz (8) sowie zwischen dem Federsatz (8) und dem Getriebeelement (5) axial einstellbare Stützelemente (11, 12; 33, 34, 35, 36) und hülsenförmige Mitnahmeelemente (13, 14; 30, 31) aufgenommen sind.

2. Getriebeanordnung (5, 18) mit einem Getriebeelement (5) gemäß Anspruch 1, **dadurch gekennzeichnet, daß** die axial bewegbaren Stützelemente (11, 12; 33, 34, 35, 36) und die hülsenförmigen Mitnahmeelemente (13, 14; 30, 31) in ringspaltförmigen Hohlräumen (9, 10) aufgenommen sind.

3. Getriebeanordnung (5, 18) mit einem Getriebeelement (5) gemäß Anspruch 1, **dadurch gekennzeichnet, daß** am Getriebelement (5) eine Anschlagfläche (21) ausgebildet ist, welche die maximale axiale Verschiebung der Stützelemente (11, 12; 33, 34, 35, 36) begrenzt.

4. Getriebeanordnung (5, 18) mit einem Getriebeelement (5) gemäß Anspruch 1, **dadurch gekennzeichnet, daß** die axiale Länge des Getnebeelementes (5) in den Einstellweg (19) unterteilende, einzelne Einstellabstände (19.1 bis 19.5) unterteilt ist.

5. Getriebeanordnung (5, 18) mit einem Getriebeelement (5) gemäß Anspruch 1, **dadurch gekennzeichnet, daß** die Mitnabmeelemente (13, 14) ringförmige Tragsegmente (15, 16) umfassen, die am Federsatz (8) an dessen Innen- und/loder an dessen Außenseite anliegen.

6. Getriebeanordnung (5, 18) mit einem Getriebeelement (5) gemäß Anspruch 1, **dadurch gekennzeichnet, daß** der Federsatz (8) zueinander relativ bewegbare Lamellen (40) umfaßt, wobei die Lamellen (40) als ein Feder-/Dämpferelement (45, 46) wirken.

7. Getriebeanordnung (5, 18) mit einem Getriebeelement (5) gemäß Anspruch 6, **daduch gekennzeichnet, daß** die Lamellen (40) im wesentlichen in Parallellage (41) zur Abtriebswelle (2) orientiert sind.

8. Getriebeanordnung (5, 18) mit einem Getriebeelement (5) gemäß Anspruch 6, **dadurch gekennzeichnet, daß** die Lamellen (40) im wesentlichen in senkrechter Lage (42) zur Abtriebswelle (2) orientiert sind.

9. Getriebeanordnung (5, 18) mit einem Getriebeelement (5) gemäß Anspruch 7, **dadurch gekennzeichnet, daß** die Lamellen (40) in Elastomersegmenten (49) eines zylindrischen Federsatzes (8) eingebettet sind.

10. Getriebeanordnung (5, 18) mit einem Getriebeelement (5) gemäß Anspruch 6, **dadurch gekennzeichnet, daß** die Lamellen (40) im Federsatz (8) als gewickelte Profilelemente (43) ausgeführt sind.

11. Getriebeanordnung (5, 18) mit einem Getriebeelement (5) gemäß Anspruch 6, **dadurch gekennzeichnet, daß** die Lamellen (40) im Federsatz (8) als konzentrische Flachfeder (44, 44.1) angeordnet sind.

12. Getriebeanordnung (5, 18) mit einem Getriebeelement (5) **dadurch gekennzeichnet, daß** den Lamellen (40) des Federsatzes (8) eine zusätzliche Axialfeder (47) zugeordnet ist.

## Claims

1. Transmission arrangement (5, 18) having a transmission element (5) which is driven at the drive input side by means of a drive motor (1), the transmission element (5) being held on the drive output shaft (2) of said drive motor (1), being provided at its peripheral face with an outer toothing (7), and meshing with one or more toothing(s) of further transmission elements (18), **characterized in that** axially adjustable support elements (11, 12; 33, 34, 35, 36) and sleeve-shaped driver elements (13, 14; 30, 31) are held between the drive input shaft (2) and a spring set (8) and between the spring set (8) and the transmission element (5).

2. Transmission arrangement (5, 18) having a transmission element (5) according to Claim 1, **characterized in that** the axially moveable support elements (11, 12; 33, 34, 35, 36) and the sleeve-shaped driver elements (13, 14; 30, 31) are held in annular-gap-shaped cavities (9, 10).

3. Transmission arrangement (5, 18) having a transmission element (5) according to Claim 1, **characterized in that** a stop face (21) is formed on the transmission element (5), said stop face (21) delimiting the maximum axial displacement of the support elements (11, 12; 33, 34, 35, 36).

4. Transmission arrangement (5, 18) having a transmission element (5) according to Claim 1, **characterized in that** the axial length of the transmission element (5) is divided into individual adjustment distances (19.1 to 19.5) which divide the adjustment path (19).

5. Transmission arrangement (5, 18) having a transmission element (5) according to Claim 1, **characterized in that** the driver elements (13, 14) comprise annular load-bearing segments (15, 16) which bear against the inside and/or against the outside of the spring set (8).

6. Transmission arrangement (5, 18) having a transmission element (5) according to Claim 1, **characterized in that** the spring set (8) comprises lamellae (40) which are moveable relative to one another, the lamellae (40) acting as a spring/damper element (45, 46).

7. Transmission arrangement (5, 18) having a transmission element (5) according to Claim 6, **characterized in that** the lamellae (40) are aligned substantially parallel (41) to the drive output shaft (2).

8. Transmission arrangement (5, 18) having a transmission element (5) according to Claim 6, **characterized in that** the lamellae (40) are aligned substantially perpendicular (42) to the drive output shaft (2).

9. Transmission arrangement (5, 18) having a transmission element (5) according to Claim 7, **characterized in that** the lamellae (40) are embedded in elastomer segments (49) of a cylindrical spring set (8).

10. Transmission arrangement (5, 18) having a transmission element (5) according to Claim 6, **characterized in that** the lamellae (40) in the spring set (8) are embodied as wound profile elements (43).

11. Transmission arrangement (5, 18) having a transmission element (5) according to Claim 6, **characterized in that** the lamellae (40) in the spring set (8) are embodied as concentric flat springs (44, 44.1).

12. Transmission arrangement (5, 18) having a transmission element (5) according to Claim 6, **characterized in that** the lamellae (40) of the spring set (8) are assigned an additional axial spring (47).

## Revendications

1. Élément d'engrenage (5, 18) comportant un élément d'engrenage (5) commandé côté entraînement par un moteur de commande (1), dont l'arbre entraîné (2) loge l'élément d'engrenage (5) muni d'une denture extérieure (7) à sa surface périphérique qui engrène d'autres éléments d'engrenage (18) ayant une ou plusieurs dentures,
**caractérisé en ce que**
des éléments d'appui réglables axialement (11, 12 ; 33, 34, 35, 36) et des éléments d'entraînement en forme de manchon (13, 14 ; 30, 31) sont logés entre l'arbre entraîné (2) et un jeu de ressorts (8) et entre le jeu de ressorts (8) et l'élément d'engrenage (5).

2. Élément d'engrenage (5, 18) comportant un élément d'engrenage (5) selon la revendication 1,
**caractérisé en ce que**
les éléments d'appui mobiles axialement (11, 12 ; 33, 34, 35, 36) et les éléments d'entraînement en forme de manchon (13, 14 ; 30, 31) sont logés dans des cavités en forme de fente annulaire (9, 10).

3. Élément d'engrenage (5, 18) comportant un élément d'engrenage (5) selon la revendication 1,
**caractérisé en ce qu'**
une surface de butée (21) formée sur l'élément d'engrenage (5) limite le déplacement axial maximum des éléments d'appui (11, 12 ; 33, 34, 35, 36).

4. Élément d'engrenage (5, 18) comportant un élément d'engrenage (5) selon la revendication 1,
**caractérisé en ce que**
la longueur axiale de l'élément d'engrenage (5) est subdivisée en intervalles de réglage séparés (19.1 à 19.5) subdivisant le chemin de réglage (19).

5. Élément d'engrenage (5, 18) comportant un élément d'engrenage (5) selon la revendication 1,
**caractérisé en ce que**
les éléments d'entraînement (13, 14) comprennent des patins de suspension circulaires (15, 16) placés contre le jeu de ressorts (8) sur la face interne et/ou la face externe de celui-ci.

6. Élément d'engrenage (5, 18) comportant un élément d'engrenage (5) selon la revendication 1,
**caractérisé en ce que**
le jeu de ressorts (8) comprend des lamelles (40) relativement mobiles les unes par rapport aux autres, les lamelles (40) agissant comme un élément de ressort/d'amortissement (45, 46).

7. Élément d'engrenage (5, 18) comportant un élément d'engrenage (5) selon la revendication 6,
**caractérisé en ce que**
les lamelles (40) sont orientées vers l'arbre entraîné (2) sensiblement en couches parallèles (41).

8. Élément d'engrenage (5, 18) comportant un élément d'engrenage (5) selon la revendication 6,
**caractérisé en ce que**
les lamelles (40) sont orientées vers l'arbre entraîné (2) sensiblement en couches verticales (41).

9. Élément d'engrenage (5, 18) comportant un élément d'engrenage (5) selon la revendication 7,
**caractérisé en ce que**
les lamelles (40) sont encastrées dans des segments d'élastomère (49) d'un jeu de ressorts cylindrique (8).

10. Élément d'engrenage (5, 18) comportant un élément d'engrenage (5) selon la revendication 6,
**caractérisé en ce que**
les lamelles (40) sont des éléments profilés enroulés (43) dans le jeu de ressorts (8).

11. Élément d'engrenage (5, 18) comportant un élément d'engrenage (5) selon la revendication 6,
**caractérisé en ce que**
les lamelles (40) des ressorts (8) plats concentriques (44, 44.1) montés dans le jeu de ressorts (8).

12. Élément d'engrenage (5, 18) comportant un élément d'engrenage (5) selon la revendication 6,
**caractérisé en ce qu'**
un ressort axial supplémentaire (47) est associé aux lamelles (40) du jeu de ressorts (8).
